# EUROPÄISCHE PATENTSCHRIFT

(11) **EP 3 372 436 B1**
(45) Veröffentlichungstag und Bekanntmachung des Hinweises auf die Patenterteilung: **07.08.2019**
(21) Anmeldenummer: 17159325.4
(22) Anmeldetag: 06.03.2017
(51) Int. Cl.: B60K 35/00, B60K 1/00, B60K 37/06, G06F 3/0482, G06F 3/0486, G06F 3/0488, B60W 50/08, G06F 3/03, G06F 3/0484, G06F 3/0481

(54) **VERFAHREN UND BEDIENSYSTEM ZUM BEREITSTELLEN EINER BENUTZERSCHNITTSTELLE**
METHOD AND OPERATION SYSTEM FOR PROVIDING A USER INTERFACE
PROCÉDÉ ET SYSTÈME DE COMMANDE DESTINÉ À FOURNIR UNE INTERFACE UTILISATEUR

(43) Veröffentlichungstag der Anmeldung: 12.09.2018
(73) Patentinhaber: VOLKSWAGEN AKTIENGESELLSCHAFT, 38440 Wolfsburg (DE)
(72) Erfinder: Kögler, Indra-Lena, 10829 Berlin (DE); Kuhn, Mathias, 14129 Berlin (DE); Chudzinski, Filip Piotr, 20255 Hamburg (DE); Yosha, Omer, 10827 Berlin (DE); Petersen, Sönke, 12205 Berlin (DE)

(56) Entgegenhaltungen:
- EP-A1- 2 924 551
- EP-A1- 2 955 614
- DE-A1-102009 033 061

## Beschreibung

Die vorliegende Erfindung betrifft ein Verfahren zum Bereitstellen einer Benutzerschnittstelle sowie ein Bediensystem zum Bereitstellen einer Benutzerschnittstelle, insbesondere in einem Fahrzeug. Sie betrifft ferner ein Fahrzeug mit einem erfindungsgemäßen Bediensystem.

Die Verwendung einer Vielzahl von elektronischen und elektronisch steuerbaren Einrichtungen in vielen Bereichen des täglichen Lebens, etwa in modernen Fahrzeugen, führt zu einem Bedarf an Möglichkeiten, Nutzereingaben zu erfassen und zu verarbeiten. Insbesondere können Einrichtungen oder einzelne ihrer Komponenten durch Schaltelemente angesteuert werden. Um eine Vielzahl von Funktionen eines Systems aufrufen und bedienen zu können, werden vielfach Multifunktionsbediensysteme eingesetzt, welche eine oder mehrere Multifunktionsanzeige(n) und Bedienelemente umfassen, mit denen die Bedienung erfolgt. Die Bedienung wird dabei durch die auf der Multifunktionsanzeige wiedergegebene Information unterstützt beziehungsweise geführt. Ferner kann über das Bediensystem ausgewählt werden, welche Informationen auf der Multifunktionsanzeige angezeigt werden sollen.

Dabei ist häufig vorgesehen, dass entweder Bedienelemente für mehrere Funktionalitäten gleichzeitig angezeigt werden und bei Bedarf zu einer detaillierteren Ansicht mit Informationen und Bedienelementen für eine einzelne Funktionalität umzuschalten. Dies verlangt ein hohes Maß Konzentration von einem Nutzer, der sich nach der Umschaltung auf einer veränderten Bedienoberfläche zurechtfinden muss.

Bei der in der DE 101 40 841 A1 beschriebenen grafischen Benutzeroberfläche ist vorgesehen, dass die Größe eines für eine Anwendung nutzbaren Bereichs einer Anzeigeeinrichtung eingestellt werden kann. Dabei kann ferner eine Zoomfunktion aktiviert werden.

Weiterhin zeigt die EP 2 955 614 A1 relevanten Stand der Technik.

Der vorliegenden Erfindung liegt die Aufgabe zugrunde, ein Verfahren und ein Bediensystem der eingangs genannten Art bereitzustellen, die einem Nutzer den Zugriff auf verschiedene Funktionen und Informationen erleichtern.

Erfindungsgemäß wird diese Aufgabe durch ein Verfahren mit den Merkmalen des Anspruchs 1 und ein Bediensystem mit den Merkmalen des Anspruchs 11 sowie ein Fahrzeug mit den Merkmalen des Anspruchs 14 gelöst. Vorteilhafte Ausgestaltungen und Weiterbildungen ergeben sich aus den abhängigen Ansprüchen.

Bei dem erfindungsgemäßen Verfahren wird zumindest ein Anwendungsprogramm ausgeführt und Grafikdaten einer Bedienoberfläche werden erzeugt und ausgegeben. Dabei ist für das Anwendungsprogramm ein Kachel-Modus oder ein Vollbild-Modus aktivierbar, wobei die Bedienoberfläche einen Teilbereich aufweist, dem das Anwendungsprogramm zugeordnet ist und der dem Anwendungsprogramm zugeordnete grafische Elemente umfasst. Dabei weist, wenn der Kachel-Modus aktiviert ist, der Teilbereich eine erste Flächenausdehnung auf und die grafischen Elemente sind in einer ersten Anordnung relativ zueinander angeordnet. Wenn der Vollbild-Modus aktiviert ist, weist der Teilbereich eine zweite Flächenausdehnung auf, die von der ersten Flächenausdehnung verschieden ist, und die grafischen Elemente sind in einer zweiten Anordnung relativ zueinander angeordnet, die von der ersten Anordnung verschieden ist. Dabei wird bei einem Wechsel zwischen dem Kachel-Modus und dem Vollbild-Modus eine Übergangsanimation erzeugt und angezeigt, wobei die Übergangsanimation für zumindest eine Teilmenge der grafischen Elemente eine Translation umfasst und die Translation als kontinuierliche Bewegung ausgegeben wird.

Dadurch wird vorteilhafterweise der Wechsel zwischen verschiedenen Ansichtsmodi für das Anwendungsprogramm besonders gut nachvollziehbar und leicht erfassbar ausgegeben. Dies wird insbesondere dadurch erreicht, dass die Bedienoberfläche beim Übergang zu dem Vollbild-Modus nicht durch eine völlig anders gestaltete Bedienoberfläche ersetzt wird, wie dies bei bekannten Systemen typischerweise geschieht. Stattdessen bleiben grafische Elemente, die bereits im Kachel-Modus angezeigt werden, erhalten und bewegen sich kontinuierlich zu ihren Positionen beziehungsweise in eine neue Anordnung, die sie im Vollbild-Modus einnehmen. Der Nutzer kann den Übergang daher besonders leicht nachvollziehen und muss weniger Konzentration dafür aufwenden, sich auf eine vollkommen neue gestalteten Bedienoberfläche zurechtzufinden. Dies ist besonders vorteilhaft beim Einsatz des Verfahrens in einem Fahrzeug, bei dem der Nutzer häufig der Fahrer des Fahrzeugs ist, von dem möglichst wenig Aufmerksamkeit für die Bedienung einer Benutzerschnittstelle verlangt werden soll.

Die Ausführung des Anwendungsprogramms erfolgt auf an sich bekannte Weise, insbesondere mittels einer Recheneinheit. Das Anwendungsprogramm ist insbesondere dazu ausgebildet, eine Bedienung einer Ausführungseinheit zu ermöglichen und/oder Informationen über den Betrieb der Ausführungseinheit auszugeben. Die Ausführungseinheit kann dabei auf unterschiedliche, an sich bekannte Weisen gebildet sein und insbesondere von der Recheneinheit umfasst und/oder mittels einer Schnittstelle mit der Recheneinheit verbunden sein. Ausführungseinheiten können beispielsweise sein: Eine Ausgabeeinheit für eine optisch, akustisch oder haptisch wahrnehmbare Ausgabe, eine Motorsteuerung oder eine andere Steuerungseinheit eines Fahrzeugs, eine Navigationseinrichtung, eine Medienwiedergabeeinrichtung, eine Telekommunikationseinheit für die Übertragung von gesprochener Sprache, Text, Bildern oder multimedialen Dateien oder eine weitere Einheit, insbesondere in einem Fahrzeug.

Auch die Erzeugung und Ausgabe der Grafikdaten der Bedienoberfläche erfolgt auf an sich bekannte Weise. Als "Bedienoberfläche" im Sinne der Erfindung wird eine Darstellung für eine Mensch-Maschine-Schnittstelle bezeichnet. Dabei sind technische Einrichtungen, insbesondere eine Ausführungseinheit, mittels Steuerelementen bedienbar, wozu etwa Schaltflächen oder Symbole der Darstellung verwendet werden können. Insbesondere kann die Bedienoberfläche Schaltflächen oder andere Bedienelemente umfassen, welche die Bedienung einer Funktionalität für einen Menschen erfassbar darstellen. Beispielsweise kann der Betrag eines Parameters dargestellt werden und seine Einstellung durch ein Einstellelement visualisiert werden. Die Bedienoberfläche kann ferner Elemente zur Informationsanzeige umfassen und damit eine durch einen Menschen interpretierbare Ausgabe ermöglichen.

Unter einer Schaltfläche wird im Sinne der Erfindung ein Steuerelement einer grafischen Benutzerschnittstelle verstanden. Eine Schaltfläche unterscheidet sich von Elementen und Flächen zur reinen Informationsanzeige, sogenannten Anzeigeelementen, darin, dass sie betätigt werden kann. Bei einer Betätigung einer Schaltfläche wird eine ihr zugeordnete Funktion ausgeführt. Die Funktion kann zu einer Veränderung der Informationsanzeige führen und/oder es können Einrichtungen gesteuert werden, deren Bedienung von der Bedienoberfläche unterstützt wird. Die Schaltfläche kann somit einen herkömmlichen mechanischen Schalter ersetzen. Sie kann beliebig für eine frei programmierbare Anzeigefläche erzeugt und von dieser angezeigt werden.

Die Bedienoberfläche kann auf unterschiedliche Weisen erzeugt werden, abhängig von dem für das Anwendungsprogramm aktivierten Anzeige-Modus. Die Aktivierung der verschiedenen Anzeige-Modi hat insbesondere Auswirkungen auf die Darstellung eines Teilbereichs der Bedienoberfläche, der dem Anwendungsprogramm zugeordnet ist. Dieser Teilbereich umfasst dem Anwendungsprogramm zugeordnete grafische Objekte, die insbesondere als Schaltflächen zur Erfassung von Nutzereingaben zur Steuerung des Anwendungsprogramms ausgebildet sein können.

Die Aktivierung des Kachel-Modus beziehungsweise des Vollbild-Modus erfolgt auf an sich bekannte Weise, beispielsweise anhand einer Eingabe eines Nutzers oder automatisch, beispielsweise ausgelöst durch ein Steuerungssignal, das von einem Anwendungsprogramm oder einer weiteren Einheit erzeugt oder empfangen werden kann.

Von dem aktivierten Anzeige-Modus hängt es ab, welche Flächenausdehnung der Teilbereich aufweist, das heißt wie groß die von dem Teilbereich beanspruchte Fläche innerhalb der Bedienoberfläche ist. Ferner hängt die Anordnung der grafischen Objekte des Teilbereichs von dem aktivierten Anzeige-Modus ab.

Bei einer Ausbildung des erfindungsgemäßen Verfahrens ist die zweite Flächenausdehnung des Teilbereichs größer als die erste Flächenausdehnung. Dadurch kann vorteilhafterweise ein Übergang zwischen einer reduzierten Repräsentation des Anwendungsprogramms innerhalb der Bedienoberfläche und einer erweiterten Repräsentation mit entsprechend vergrößerter Flächenausdehnung bereitgestellt werden.

Wenn für das Anwendungsprogramm der Kachel-Modus aktiviert ist, wird der Teilbereich insbesondere nach Art eines *"Widgets"* oder einer "Kachel" auf an sich bekannte Weise dargestellt. Der Begriff "Kachel" soll dabei die Ausbildung des Teilbereichs nicht einschränken, insbesondere ist der Teilbereich nicht auf einen rechteckigen Umriss beschränkt. Insbesondere kann vorgesehen sein, dass der Teilbereich zumindest in dem Kachel-Modus so ausgebildet ist, dass mehrere Teilbereiche zugleich auf der Bedienoberfläche angeordnet sein können, insbesondere aneinander angrenzend.

Ein als *Widget* ausgebildeter und dem Anwendungsprogramm zugeordneter Teilbereich umfasst beispielsweise Informationen über eine Ausführungseinheit beziehungsweise über zumindest eine durch die Ausführungseinheit ausführbaren Funktion. Innerhalb des Teilbereichs können insbesondere Informationen über eine Ausführungseinheiten gezeigt werden, die laufend aktualisiert werden. Beispielsweise können von dem Teilbereich Routeninformationen eines Navigationssystems, aktuelle Meldungen zum Wetter, zu einem Straßenzustand und zu einem Verkehrszustand angezeigt werden sowie Informationen zu Multimedia- und/oder Kommunikationseinrichtungen des Fahrzeugs. Der Teilbereich wird insbesondere unabhängig vom weiteren Anzeigeinhalt der Bedienoberfläche dargestellt. Erfolgt die Darstellung des Teilbereichs als Anzeigefenster, können auch grafische Objekte des Teilbereichs als Widgets ausgebildet sein. Dabei hat der Nutzer über das Anzeigefenster Zugang zu weiteren Widgets.

Insbesondere kann vorgesehen sein, dass die erste Flächenausdehnung geringer ist als eine ausgebbare Fläche der Bedienoberfläche, beispielsweise aufgrund einer begrenzten Größe einer Anzeigefläche. In diesem Fall ist die Teilfläche im Kachel-Modus eine echte Teilfläche innerhalb der Bedienoberfläche, das heißt, sie nimmt nicht den gesamten Bereich der Bedienoberfläche ein. Ferner kann vorgesehen sein, dass die zweite Flächenausdehnung die vollständige Fläche der Bedienoberfläche beziehungsweise der darstellbaren Fläche einnimmt. In diesem Fall umfasst der dem Anwendungsprogramm zugeordnete Teilbereich in dem Vollbild-Modus eine Vollbilddarstellung. In einer weiteren Ausführungsform kann für die Vollbilddarstellung ein bestimmter Bereich der Bedienoberfläche vorgesehen sein, etwa ein innerhalb der Bedienoberfläche dargestelltes Fenster, in dem weitere Teilbereiche definiert sein können.

Bei einer weiteren Ausbildung umfassen die dem Anwendungsprogramm zugeordneten grafischen Elemente Schaltflächen. Dadurch können vorteilhafterweise Eingaben eines Nutzers für das Anwendungsprogramm erfasst werden. Die Schaltflächen sind dabei so ausgebildet, dass ihnen jeweils eine bestimmte Fläche innerhalb der Bedienoberfläche beziehungsweise innerhalb des dem Anwendungsprogramm zugeordneten Teilbereichs zugeordnet ist. Eine Auswahl und/oder Betätigung einer Schaltfläche kann dann anhand dieser zugeordneten Fläche erfolgen, beispielsweise durch eine Berührung eines Touchscreens an einer Position innerhalb der Fläche.

Die grafischen Elemente sind erfindungsgemäß bei dem Kachel-Modus in einer ersten Anordnung relativ zueinander angeordnet, welche verschieden ist von einer zweiten Anordnung, welche die Anordnung relativ zueinander im Vollbild-Modus präsentiert. Die Anordnung kann auf unterschiedliche Weisen erfolgen, wobei insbesondere relative und/oder absolute Abstände der grafischen Elemente zueinander als Parameter der Anordnungen berücksichtigt werden.

Die grafischen Elemente können beispielsweise untereinander, nebeneinander oder als Matrix mit Reihen und Spalten angeordnet sein. Ferner kann eine benutzerdefinierte Anordnung vorgesehen sein. Zudem können andere Anordnungen nach an sich bekannte Weise vorgesehen sein.

Bei einer Weiterbildung sind die erste und die zweite Anordnung der grafischen Elemente relativ zueinander durch zumindest einen Relativwinkel charakterisiert und der Relativwinkel wird bei dem Wechsel zwischen dem Kachel-Modus und im Vollbild-Modus verändert. Dadurch können die verschiedenen Anordnungen vorteilhafterweise besonders einfach parametrisiert werden.

Insbesondere können die Anordnungen der grafischen Elemente durch paarweise Winkel gedachter Verbindungslinien zwischen jeweils zwei grafischen Elementen parametrisiert werden. Alternativ oder zusätzlich kann eine Parametrisierung mittels absoluter oder relativer paarweiser Abstände erfolgen.

Das heißt, die grafischen Elemente sind bei der ersten und zweiten Anordnung in unterschiedlichen Winkeln zueinander angeordnet. Insbesondere beschränkt sich die Veränderung von der ersten zu der zweiten Anordnung der grafischen Elemente beim Übergang zwischen den Anzeige-Modi nicht auf eine Skalierung der Abstände und/oder eine gleichförmigen Verschiebung für alle grafischen Elemente, sondern durch die Veränderung der Winkel zueinander werden grundlegend verschiedene Anordnungen erzeugt. Insbesondere wird bei dem Übergang eine kontinuierliche Veränderung durch Verschiebung der grafischen Elemente angezeigt.

Bei der Übergangsanimation ist gemäß der Erfindung vorgesehen, dass eine kontinuierliche Bewegung zumindest einer Teilmenge der grafischen Elemente ausgegeben wird. Dabei werden Positionen der bewegten grafischen Elemente innerhalb der Bedienoberfläche verändert und folgen einer Funktion, die zumindest eine in Abhängigkeit von der Zeit veränderliche Position betrifft. Diese Funktion ist insbesondere stetig ausgebildet, bevorzugt stetig differenzierbar, und kann auf unterschiedliche Weisen gebildet werden. Insbesondere kann die Bewegung in Abhängigkeit von einer Ausgangsposition der Teilfläche und/oder der grafischen Elemente der Teilfläche gebildet werden, sodass die Bewegung unterschiedlich gebildet werden kann, je nach der Konfiguration der Bedienoberfläche zu Beginn der Übergangsanimation.

Die Übergangsanimation wird auf an sich bekannte Weise erzeugt und angezeigt, insbesondere als Abfolge von Einzelbildern, die so erzeugt werden, dass dem Betrachter der Eindruck einer kontinuierlichen Bewegung der grafischen Elemente vermittelt wird.

Bei einer Ausbildung wird bei dem Wechsel zwischen dem Kachel-Modus und dem Vollbild-Modus für zumindest eine Teilmenge der grafischen Elemente ferner eine Größenänderung angezeigt. Dadurch können vorteilhafterweise die grafischen Elemente für verschiedene Anzeige-Modi in entsprechend angepassten Größen ausgegeben werden.

Bei einer weiteren Ausbildung ist vorgesehen, dass die Größenänderung der Teilmenge der grafischen Elemente anhand eines Skalierungsfaktors erzeugt wird, der anhand einer stetigen Funktion, bevorzugt anhand einer stetig differenzierbar Funktion, in Abhängigkeit von der Zeit erzeugt wird. Dadurch wird vorteilhafterweise bei der Übergangsanimation eine kontinuierliche Größenänderung erzeugt.

Insbesondere können verschiedene Skalierungsfaktoren für die grafischen Elemente eines Teilbereichs vorgesehen sein, sodass bei dem Übergang zwischen den Anzeige-Modi nicht alle Elemente gleichermaßen vergrößert oder verkleinert dargestellt werden.

Bei einer Weiterbildung umfasst die Bedienoberfläche einen Programmdatenbereich. Dabei umfasst die erste Flächenausdehnung des dem Anwendungsprogramm zugeordneten Teilbereichs, wenn der Kachel-Modus aktiviert ist, höchstens zwei Drittel der gesamten Fläche des Programmdatenbereichs. Wenn der Vollbild-Modus aktiviert ist, umfasst der dem Anwendungsprogramm zugeordnete Teilbereich die gesamte Fläche des Programmdatenbereichs. Dadurch kann vorteilhafterweise zwischen einer Vollbilddarstellung für das Anwendungsprogramm und einer weiteren Darstellung als echter Teilbereich der Bedienoberfläche umgeschaltet werden.

Bei aktiviertem Vollbild-Modus kann eine Vollbilddarstellung des Teilbereichs auf an sich bekannte Weise angezeigt werden. Dabei kann vorgesehen sein, dass der Programmdatenbereich die gesamte Fläche einer verfügbaren Anzeigefläche der Bedienoberfläche umfasst. Alternativ kann der Programmdatenbereich einen Teil dieser Fläche umfassen, etwa wenn zudem eine Statusleiste vorgesehen ist, die auch während der Darstellung des Teilbereichs im Vollbild-Modus angezeigt wird. Ferner können weitere Teilbereiche der Bedienoberfläche vorgesehen sein, sodass der dem Anwendungsprogramm zugeordnete Teilbereich im Vollbild-Modus lediglich einen bestimmten dafür vorgesehenen Teil der darstellbaren Fläche der Bedienoberfläche einnimmt. In diesem Fall können bei dem Kachel-Modus weitere Teilbereiche vorgesehen sein, die anderen Anwendungsprogrammen zugeordnet sind. Beispielsweise kann der dem Anwendungsprogramm zugeordnete Teilbereich bei den Wechsel zwischen den Anzeige-Modi einen für die Ausgabe von Programmdaten reservierten Teil der Bedienoberfläche teilweise oder vollständig einnehmen.

Bei einer Ausbildung der Erfindung umfasst die Bedienoberfläche, wenn der Kachel-Modus aktiviert ist, neben dem Teilbereich, der dem Anwendungsprogramm zugeordnet ist, weitere Teilbereiche und bei einem Übergang von dem Kachel-Modus zu dem Vollbild-Modus wird ein Ausblenden der weiteren Teilbereiche ausgegeben. Dadurch kann vorteilhafterweise der Übergang zwischen den Anzeige-Modi besonders deutlich und leicht erfassbar ausgegeben werden.

Bei dem Ausblenden der weiteren Teilbereiche, die im Kachel-Modus gleichzeitig mit dem Teilbereich des Anwendungsprogramms angezeigt werden, können auf an sich bekannte Weise verschiedene optische Darstellungsformen verwendet werden. Der Begriff "Ausblenden" ist dabei breit zu interpretieren. Beispielsweise können die weiteren Teilbereiche mit veränderter Helligkeit, verändertem Kontrast oder perspektivisch von der Bildebene entfernt dargestellt werden. Zur Darstellung einer perspektivischen Verschiebung können ferner sich gegenseitig überdecken Teilbereiche dargestellt werden, wobei insbesondere ein Teilbereich, der in den Vollbild-Modus übergeht, weitere Teilbereiche überdecken kann.

Die Veränderung eines Parameters der Darstellung während des Ausblenden erfolgt insbesondere kontinuierlich, das heißt allmählich und einer stetigen, bevorzugt eine stetig differenzierbaren, Funktion folgend. Alternativ oder zusätzlich kann bei der Übergangsanimation eine Verdrängung weiterer Teilbereiche durch eine Vergrößerung des Teilbereichs beim Übergang in den Vollbild-Modus dargestellt werden, etwa indem die Übergangsanimation so erzeugt wird, dass die weiteren Teilbereiche aus dem dargestellten Bereich der Bedienoberfläche hinaus im gleichen Maße "geschoben" werden, wie der Teilbereich vergrößert wird, der in den Vollbild-Modus übergeht.

Alternativ oder zusätzlich kann der dem Anwendungsprogramm zugeordnete Teilbereich bei dem Übergang zwischen den Anzeige-Modi auf verschiedene Weisen veränderlich dargestellt werden, beispielsweise indem durch eine perspektivische Darstellung eine Bewegung des Teilbereichs in den Vordergrund dargestellt wird und/oder eine weitere Veränderung der Darstellung dargestellt wird, beispielsweise eine Veränderung der Helligkeit, des Kontrastes oder weiterer Parameter.

Bei einer weiteren Ausbildung erstreckt sich die Übergangsanimation über eine Zeitspanne von höchstens 1 s, bevorzugt über zumindest 0,1 s und höchstens 0,7 s. Dadurch wird vorteilhafterweise der Übergang zwischen den Anzeige-Modell so erzeugt, dass er für den Nutzer schnell genug wahrnehmbar ist, ohne dabei einen zu raschen und eventuell verwirrenden Übergang darzustellen.

Bei einer Weiterbildung wird eine Nutzereingabe erfasst und der Wechsel zwischen dem Kachel-Modus und im Vollbild-Modus wird anhand der Nutzereingabe erzeugt. Dadurch kann der Übergang zwischen den Anzeige-Modi manuell nach den Bedürfnissen eines Nutzers ausgelöst werden.

Die Erfassung der Nutzereingabe kann auf verschiedene, an sich bekannte Weisen erfolgen, beispielsweise indem das Betätigen einer Schaltfläche oder eines analogen Schalters erfasst wird oder durch Erfassung eines Sprachbefehls oder einer anderen Eingabe.

Dabei kann ferner vorgesehen sein, dass die Übergangsanimation in Abhängigkeit von der Nutzereingabe erfasst wird, beispielsweise indem die Übergangsanimation unterschiedlich schnell ausgeführt wird, je nachdem wie die Nutzereingabe gebildet ist, durch welche der Übergang von dem Kachel-Modus zu dem Vollbild-Modus ausgelöst wird.

Beispielsweise kann die Nutzereingabe eine Wischgeste entlang einer berührungsempfindlichen Oberfläche umfassen, durch die eine Veränderung der Größe und/oder eine Zielgröße sowie optional eine Position des Teilbereichs nach dem Übergang bestimmt wird. In diesem Fall kann die Übergangsanimation in Abhängigkeit von der Wischgeste gebildet werden.

Erfindungsgemäß wird ein Umgebungsparameter erfasst und die Übergangsanimation wird in Abhängigkeit von dem Umgebungsparameter gebildet. Dabei ist der Umgebungsparameter eine Fahrzeuggeschwindigkeit. Dadurch kann vorteilhafterweise die Übergangsanimation auf spezifische Bedürfnisse eines Nutzers angepasst in Abhängigkeit von dem Umgebungsparameter gebildet werden.

Beispielsweise kann eine Geschwindigkeit der Bewegung der grafischen Elemente während der Übergangsanimation in Abhängigkeit von dem Umgebungsparameter gebildet werden, etwa umso schneller, je höher eine erfasste Fahrzeuggeschwindigkeit ist. Dadurch kann insbesondere beim Ausführen des erfindungsgemäßen Verfahrens in einem Fahrzeug die Übergangsanimation so gebildet werden, dass der Übergang umso schneller durchgeführt werden kann, je schneller sich das Fahrzeug bewegt, um eine besonders schnelle Erfassung durch den Nutzer sicherzustellen. Umgekehrt kann der Übergang langsamer durchgeführt werden, wenn sich das Fahrzeug langsamer bewegt, um den Übergang besonders deutlich darzustellen.

Das erfindungsgemäße Bediensystem zum Bereitstellen einer Bedienschnittstelle umfasst eine Recheneinheit, durch die zumindest ein Anwendungsprogramm ausführbar ist und Grafikdaten einer Bedienoberfläche erzeugbar sind. Es umfasst ferner eine Ausgabeeinheit, durch welche die Bedienoberfläche ausgebbar ist. Dabei ist für das Anwendungsprogramm ein Kachel-Modus oder ein Vollbild-Modus aktivierbar, wobei die Bedienoberfläche einen Teilbereich aufweist, dem das Anwendungsprogramm zugeordnet ist und der dem Anwendungsprogramm zugeordnete grafische Elemente umfasst. Dabei weist, wenn der Kachel-Modus aktiviert ist, der Teilbereich eine erste Flächenausdehnung auf und die grafischen Elemente sind in einer ersten Anordnung relativ zueinander angeordnet. Wenn der Vollbild-Modus aktiviert ist, weist der Teilbereich eine zweite Flächenausdehnung auf, die von der ersten Flächenausdehnung verschieden ist, und die grafischen Elemente sind in einer zweiten Anordnung relativ zueinander angeordnet, die von der ersten Anordnung verschieden ist. Dabei ist bei einem Wechsel zwischen dem Kachel-Modus und dem Vollbild-Modus eine Übergangsanimation erzeugbar und ausgebbar, wobei die Übergangsanimation für zumindest eine Teilmenge der grafischen Elemente eine Translation umfasst und die Translation als kontinuierliche Bewegung ausgebbar ist.

Das erfindungsgemäße Bediensystem ist insbesondere ausgebildet, das vorstehend beschriebene erfindungsgemäße Verfahren zu implementieren. Das Bediensystem weist somit dieselben Vorteile auf wie das erfindungsgemäße Verfahren.

Bei einer Ausbildung des erfindungsgemäßen Bediensystems ist durch eine Erfassungseinheit eine Nutzereingabe erfassbar und anhand der Nutzereingabe ist der Wechsel zwischen dem Kachel-Modus und dem Vollbild-Modus anhand der Nutzereingabe erzeugbar. Dadurch kann vorteilhafterweise eine durch einen Nutzer des Bediensystems gesteuerte Konfiguration der Bedienoberfläche erfolgen.

Bei einer weiteren Ausbildung sind die Ausgabeeinheit und die Erfassungseinheit von einem Touchscreen umfasst. Dadurch kann das Bediensystem vorteilhafterweise besonders einfach und schnell mittels einer dem Benutzer typischerweise vertrauten Einrichtung bedient werden.

Ferner sind Touchscreens bereits in vielen Bereichen des täglichen Lebens präsent, insbesondere in modernen Kraftfahrzeugen, sodass eine Implementierung des Bediensystems für bestehende Systeme leicht und kostengünstig möglich ist.

Das erfindungsgemäße Fahrzeug umfasst ein erfindungsgemäßes Bediensystem gemäß der obigen Beschreibung.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Bediensystems,
- Figuren 2A und 2B: zeigen Beispiele von Anzeigen, die bei der Ausführung eines ersten Ausführungsbeispiels des erfindungsgemäßen Verfahrens erzeugt werden können, und
- Figuren 3A, 3B und 3C: zeigen Beispiele von Anzeigen, die bei der Ausführung eines zweiten Ausführungsbeispiels des erfindungsgemäßen Verfahrens erzeugt werden können.

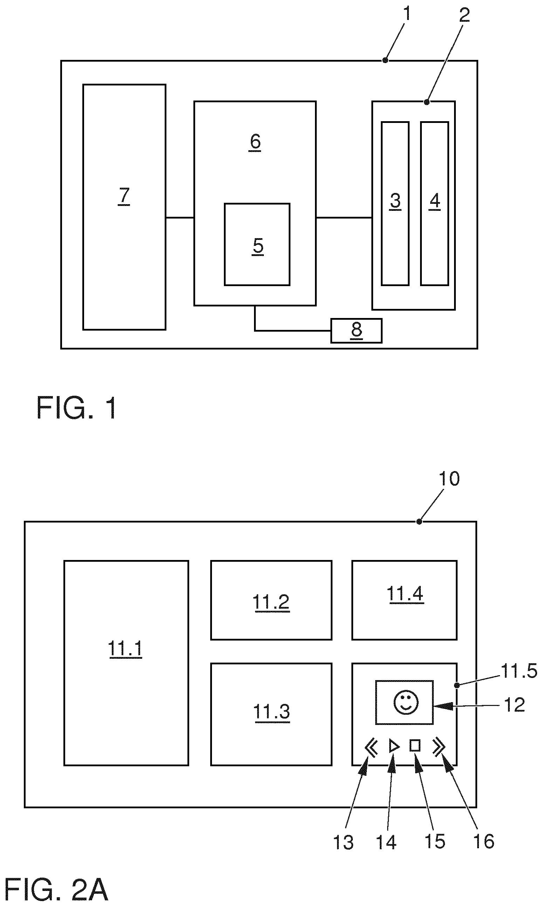

Mit Bezug zu Figur 1 wird ein Fahrzeug mit einem Ausführungsbeispiel des erfindungsgemäßen Bediensystems erläutert.

Ein Fahrzeug 1 umfasst eine Steuereinheit 6, die wiederum eine Recheneinheit 5 umfasst. Mit der Steuereinheit 6 sind ein Touchscreen 2, eine Annäherungserfassungseinheit 8 und eine Medienwiedergabeeinrichtung 7 gekoppelt.

Der Touchscreen 2 umfasst eine Ausgabeeinheit 4, bei dem Ausführungsbeispiel eine Anzeigefläche 4, und eine Erfassungseinheit 3, hier eine berührungsempfindliche Oberfläche 3. Beispielsweise kann die berührungsempfindliche Oberfläche 3 als über der Anzeigefläche 4 angeordnete Folie ausgebildet sein, mit welcher die Position einer Berührung eines Betätigungsobjekts detektiert werden kann. Bei dem Betätigungsobjekt handelt es sich insbesondere um die Fingerspitze eines Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 4 angezeigten grafischen Objekt zugeordnet werden. Des Weiteren kann die Dauer der Berührung bei einer bestimmten Position oder innerhalb eines bestimmten Bereichs erfasst werden.

Es können ferner Gesten erfasst werden, wobei eine zeitliche Veränderung der Berührung erfasst wird. Beispielsweise kann eine Geste eine Trajektorie umfassen, wobei das Betätigungsobjekt die berührungsempfindliche Oberfläche 3 an einer bestimmten Position berührt, anschließend seine Position entlang der Trajektorie ändert und die Berührung schließlich an einer weiteren Position gelöst wird. Eine Geste kann ferner eine Berührung an einer bestimmten Position für eine bestimmte Zeitdauer umfassen, beispielsweise indem zwischen einem kurzen Antippen und einer Berührung mit längerer Dauer (*Longpress*) unterschieden wird. Ferner können Gesten erkannt werden, bei denen die berührungsempfindliche Oberfläche 3 an mehreren Positionen gleichzeitig berührt wird, beispielsweise durch mehrere Finger des Nutzers, etwa in einem bestimmten oder in einem sich verändernden Abstand zueinander. Weitere Gesten können auf an sich bekannte Weise erfasst werden.

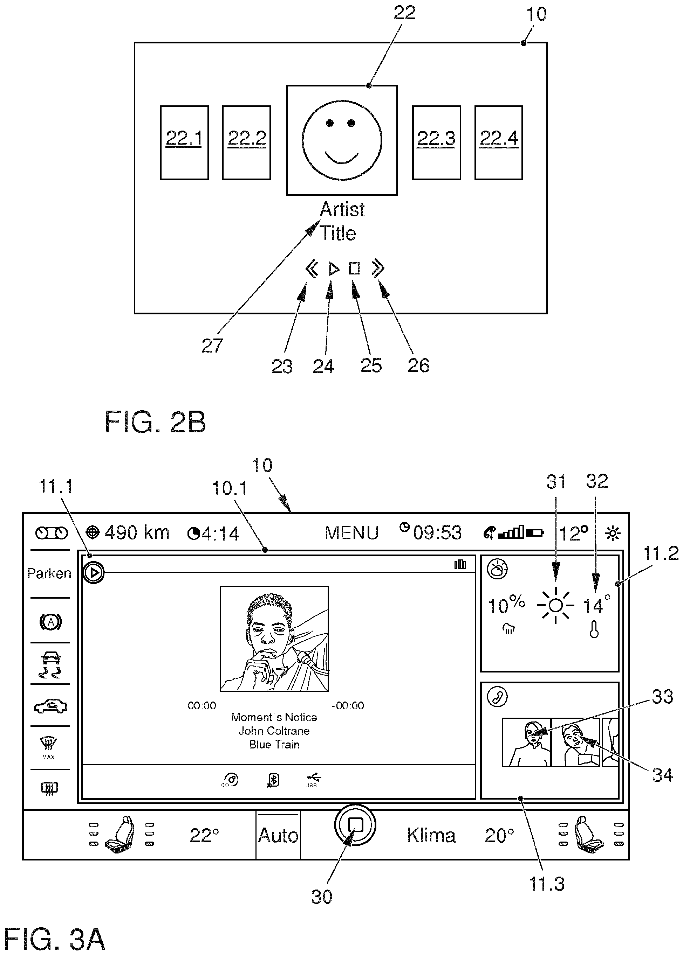

Mit Bezug zu den Figuren 2A und 2B werden Beispiele von Anzeigen erläutert, wie sie bei der Ausführung eines ersten Ausführungsbeispiels des erfindungsgemäßen Verfahrens erzeugt werden können. Dabei wird von dem oben mit Bezug zu Figur 1 erläuterten Ausführungsbeispiel des erfindungsgemäßen Bediensystems ausgegangen.

Bei dem Verfahren werden durch die Recheneinheit 5 Grafikdaten einer Bedienoberfläche 10 erzeugt und an den Touchscreen 2 übertragen, wo die Bedienoberfläche 10 durch die Anzeigefläche 4 ausgegeben wird.

Ferner werden durch die Recheneinheit 5 Anwendungsprogramme ausgeführt. Der Begriff "Anwendungsprogramm" wird erfindungsgemäß breit ausgelegt und umfasst insbesondere alle anhand eines Rechners ausführbaren Funktionen, insbesondere anhand einer vorgegebenen Abfolge computerlesbar gespeicherter Instruktionen. Im Folgenden wird ein bestimmtes Anwendungsprogramm betrachtet, was allerdings die Ausführung weiterer Anwendungsprogramme nicht ausschließen soll.

Bei dem in Figur 2A dargestellten Fall ist der Kachel-Modus des Anwendungsprogramms aktiviert. Die Bedienoberfläche 10 umfasst Teilbereiche 11.1, 11.2, 11.3, 11.4, 11.5, die jeweils einem durch die Recheneinheit 5 ausgeführten Anwendungsprogramm zugeordnet sind und in denen Ausgabedaten der jeweiligen zugeordneten Anwendungsprogramm ausgegeben werden, beispielsweise Ausgabedaten eines Anwendungsprogramms zum Abspielen von Mediendateien, die bei dem Ausführungsbeispiel durch die Medienwiedergabeeinrichtung 7 bereitgestellt werden. Diese Bereiche sind insbesondere auf an sich bekannte Weise als Kacheln 11.1, 11.2, 11.3, 11.4, 11.5 oder *Widgets* 11.1, 11.2, 11.3, 11.4, 11.5 der Bedienoberfläche 10 ausgebildet.

Bei dem in Figur 2A dargestellten Fall umfasst die unten rechts angeordnete Kachel 11.5 grafische Elemente 12, 13, 14, 15, 16. Diese ermöglichen bei dem Beispiel eine grundlegende Bedienung der Medienwiedergabeeinrichtung 7. Die grafischen Elemente 12, 13, 14, 15, 16 sind zumindest teilweise als Schaltflächen ausgebildet, wobei eine Berührung des Touchscreens 2 an einer den jeweiligen grafischen Elementen 12, 13, 14, 15, 16 zugeordneten Position eine bestimmte Funktion ausgelöst, etwa den Start oder Stopp der Wiedergabe eines Musiktitels oder den Sprung zum nächsten oder vorhergehenden Titel der gerade wiedergegebenen Abspielliste. Ferner sind grafische Elemente 12, 13, 14, 15, 16 zumindest teilweise zur Ausgabe von Informationen vorgesehen, etwa über den Namen des derzeit wiedergegebenen Titels oder zur Wiedergabe eines Albumcovers oder eines anderen dem derzeit wiedergegebenen Titel zugeordneten Bildes. In weiteren Ausführungsbeispielen können andere Anwendungsprogramme gesteuert werden und/oder andere Informationen ausgegeben werden.

Bei dem in Figur 2B gezeigten Fall wurde für das Anwendungsprogramm zum Steuern Medienwiedergabeeinrichtung 7 (siehe Figur 2A, Kachel 11.5 rechts unten) der Vollbild-Modus aktiviert. Dies kann auf unterschiedliche Weisen geschehen, insbesondere anhand einer Nutzereingabe, etwa ausgelöst durch eine Berührung der berührungsempfindlichen Oberfläche 3 des Touchscreens 2 an einer bestimmten Position der Kachel 11.5, eine Wischgeste, die der Kachel 11.5 zugeordnet ist, oder eine andere Eingabe. Ferner kann der Vollbild-Modus auf andere Weise, beispielsweise automatisch, aktiviert werden.

Bei dem Ausführungsbeispiel ist vorgesehen, dass der Vollbild-Modus für genau ein Anwendungsprogramm aktiviert werden kann, dem eine der Kacheln 11.1, 11.2, 11.3, 11.4, 11.5 zugeordnet ist. In weiteren Ausführungsbeispielen kann vorgesehen sein, dass die Bedienoberfläche 10 mehrere Bereiche aufweist, innerhalb derer für jeweils ein Anwendungsprogramm ein Vollbild-Modus für diesen Bereich aktiviert werden kann, beispielsweise durch eine Teilung der Anzeigefläche 4 in zwei Hälften.

Bei der Ausgabe der Bedienoberfläche 10 für das Anwendungsprogramm im Vollbild-Modus, wie in Figur 2B gezeigt, werden die zuvor für den Kachel-Modus in Figur 2A gezeigten grafischen Elemente 12, 13, 14, 15, 16 transformiert und als transformierte grafische Elemente 22, 23, 24, 25, 26 dargestellt. Die transformierten grafischen Elemente 22, 23, 24, 25, 26 werden gegenüber den im Kachel-Modus angezeigten grafischen Elementen 12, 13, 14, 15, 16 vergrößert und innerhalb der Bedienoberfläche 10 verschoben dargestellt. Zudem ist bei dem in Figur 2B gezeigten Fall die Anordnung der grafischen Elemente 22, 23, 24, 25, 26 auch dadurch verändert, dass eines dieser grafischen Elemente 22 in einem größeren Abstand zu den weiteren grafischen Elementen 23 bis 26 dargestellt ist als in Figur 2A für das ursprüngliche grafische Element 12 gezeigt. Durch die Vergrößerung des Abstandes verändern sich auch die relativen Winkel, die zwischen den grafischen Elementen 12, 13, 14, 15, 16, 22, 23, 24, 25, 26 paarweise definiert werden können, beispielsweise anhand gedachter Verbindungslinien zwischen den geometrischen Schwerpunkten der dargestellten grafischen Objekte 12, 13, 14, 15, 16, 22, 23, 24, 25, 26. In weiteren Ausführungsbeispielen kann die Anordnung der im Vollbild-Modus dargestellten grafischen Objekte 22, 23, 24, 25, 26 gegenüber den im Kachel-Modus dargestellten grafischen Objekten 12, 13, 14, 15, 16 auf unterschiedliche Weisen verändert sein, wobei insbesondere relative und absolute paarweise Abstände sowie Winkel, die durch gedachter Verbindungslinien gebildet werden, durch eine Transformation verändert werden. Alternativ oder zusätzlich kann die Transformation ferner eine Rotation und/oder eine perspektivische Verschiebung, beispielsweise aus der Bildebene hinaus, umfassen. Zudem kann die Anordnung von nebeneinander, untereinander oder in einer Matrix dargestellten Objekten verändert werden.

Die in Figur 2B gezeigte Anzeige umfasst ferner gegenüber der Anzeige in Figur 2A neue grafische Elemente 22.1, 22.2, 22.3, 22.4, 27. Diese ergänzen den anhand der Bedienoberfläche 10 bedienbaren Funktionsumfang, wobei insbesondere zusätzliche Informationen durch einen dargestellten Text 27 ausgegeben werden. Ferner werden weitere Titel der Abspielliste durch weitere grafische Elemente 22.1, 22.2, 22.3, 22.4 dargestellt und sind auswählbar. In weiteren Ausführungsbeispielen können andere neue Elemente hinzugefügt werden oder es kann vorgesehen sein, dass nicht alle der im Kachel-Modus angezeigten grafischen Elemente 12, 13, 14, 15, 16 auch im Vollbild-Modus repräsentiert sind, sondern bei dem Übergang zum Beispiel ausgeblendet werden.

Bei dem Übergang von dem Kachel-Modus (siehe Figur 2A) zu dem Vollbildmodus-Modus (siehe Figur 2B) wird bei dem Ausführungsbeispiel eine Übergangsanimation erzeugt und auf der Anzeigefläche 4 des Touchscreens 2 ausgegeben. Diese Übergangsanimation umfasst eine kontinuierliche Verschiebung zumindest einer Teilmenge der grafischen Elemente 12, 13, 14, 15, 16. Die grafischen Elemente 12, 13, 14, 15, 16 bewegen sich während der Übergangsanimation von ihren jeweiligen Positionen im Kachel-Modus zu den Positionen der entsprechenden grafischen Elemente 22, 23, 24, 25, 26 im Vollbild-Modus. Dabei wird zumindest ein Abschnitt der Bewegung als kontinuierliche Bewegung angezeigt, das heißt, die Bewegung erfolgt nicht sprunghaft, sondern während der Übergangsanimation werden auf an sich bekannte Weise Zwischenbilder so erzeugt und angezeigt, dass ein Nutzer einen zusammenhängenden Bewegungsablauf wahrnimmt.

Ferner wird während der Übergangsanimation eine Vergrößerung der dem entsprechenden Anwendungsprogramm zugeordneten Kachel 11.5 zu einer Vollbilddarstellung angezeigt. Weitere Elemente der Bedienoberfläche 10, insbesondere weitere Kacheln 11.1, 11.2, 11.3, 11.4, können dabei durch die vergrößerte Kachel 11.5 überdeckt, werden alternativ oder zusätzlich kann ein Ausblenden der weiteren Elemente dargestellt werden und/oder die Darstellung der weiteren Elemente kann so verändert werden, dass die vergrößerte Kachel 11.5 ihnen gegenüber hervorgehoben dargestellt wird, beispielsweise indem die Darstellung der weiteren Elemente mit einer veränderten Helligkeit, einem veränderten Kontrast, einer Verschiebung zu den Rändern der Bedienoberfläche 10 hin, einer Verkleinerung und/oder mit einer perspektivischen Veränderung, beispielsweise einer Entfernung aus der Bildebene, erfolgt.

Bei dem Ausführungsbeispiel ist vorgesehen, dass die Bewegung der grafischen Elemente 12, 13, 14, 15, 16 mit einer zeitlich veränderlichen Geschwindigkeit erfolgt, wobei die Bewegung eine langsamere Anfangsphase, eine schnellere mittlere Phase und eine langsamere Schlussphase umfasst. Diese Geschwindigkeit kann für verschiedene grafische Elemente 12, 13, 14, 15, 16 unterschiedlich gebildet sein, beispielsweise indem die Verschiebung umso schneller erfolgt, je größer die zurückzulegende Strecke ist. In weiteren Ausführungsbeispielen kann die Bewegung auf andere Weisen gestaltet sein.

Ferner ist vorgesehen, dass eine Geschwindigkeit des Fahrzeugs 1 erfasst wird und die Bewegung anhand dieser Geschwindigkeit erzeugt wird. Beispielsweise kann die Übergangsanimation so erzeugt werden, dass sie bei höherer Geschwindigkeit eine geringere Zeit dauert und umgekehrt bei geringerer Geschwindigkeit eine längere Zeit dauert. Alternativ oder zusätzlich können weitere Umgebungsparameter erfasst und für die Erzeugung der Übergangsanimation berücksichtigt werden.

Bei dem Ausführungsbeispiel ist ferner eine Vergrößerung der grafischen Elemente 12, 13, 14, 15, 16 während der Übergangsanimation beim Übergang von dem Kachel-Modus zu dem Vollbild-Modus vorgesehen, sodass die im Vollbild-Modus angezeigten grafischen Elemente 22, 23, 24, 25, 26 jeweils eine größere Fläche einnehmen. Die Vergrößerung erfolgt anhand eines Skalierungsfaktors, der insbesondere zusammen mit der Geschwindigkeit der Verschiebung gebildet werden kann, das heißt, die Vergrößerung kann schneller oder langsamer erfolgen. Ferner sind unterschiedliche Skalierungsfaktoren für unterschiedliche grafische Elemente 12, 13, 14, 15, 16 vorgesehen.

Bei dem Ausführungsbeispiel ist vorgesehen, dass durch die Annäherungserfassungseinheit 8 eine Annäherung eines Betätigungsobjekts, insbesondere einer Hand eines Nutzers an den Touchscreen 2 erfassbar ist, wobei insbesondere detektiert wird, ob ein Betätigungsobjekt in einen Detektionsbereich vor der Anzeigefläche 4 eintritt. Ist dies der Fall, so wird dies als das Vorliegen einer Bedienabsicht interpretiert, während keine Bedienabsicht angenommen wird, wenn kein Betätigungsobjekt in dem Detektionsbereich erfasst wird. Alternativ oder zusätzlich kann vorgesehen sein, dass eine Berührung des Touchscreens 2 oder gegebenenfalls einer weiteren Bedienvorrichtung des Fahrzeugs 1 durch ein Betätigungsobjekt als Bedienabsicht erfasst wird.

Beispielsweise kann, wenn keine Bedienabsicht erfasst wurde, die Bedienoberfläche so erzeugt werden, dass Schaltflächen lediglich angedeutet werden und verschiedene Informationen über die Arbeit des Systems besonders übersichtlich ausgegeben werden. Wird dagegen der Eintritt eines Betätigungsobjekts, insbesondere eines Fingers des Nutzers, in den Detektionsbereich der Annäherungserfassungseinheit 8 erfasst, so kann dies als Vorliegen einer Bedienabsicht interpretiert werden. Die Bedienoberfläche 10 kann gegenüber dem Fall ohne detektierte Bedienabsicht so verändert werden, dass Schaltflächen, durch deren Betätigung der Nutzer Eingaben vornehmen kann, sichtbar dargestellt werden. Beispielsweise können anhand einer Umrandung der Schaltflächen angezeigt werden, während ohne eine erfasste Bedienabsicht lediglich Symbole an den Positionen der Schaltflächen angezeigt werden.

Bei weiteren Ausführungsbeispielen ist keine Annäherungserfassungseinheit 8 vorgesehen. Jedoch kann auch bei solchen Ausführungsbeispiel vorgesehen sein, dass eine Annäherung beziehungsweise eine Bedienabsicht des Nutzers erfasst wird, wenn eine Berührung der berührungsempfindlichen Oberfläche 3 des Touchscreens 2 und/oder gegebenenfalls einer anderen Bedienungsvorrichtung erfasst wird. Ferner kann das Bediensystem ohne eine solche Erfassung der Bedienabsicht des Nutzers ausgeführt werden, wobei in diesem Fall typischerweise stets von einer Bedienabsicht ausgegangen wird.

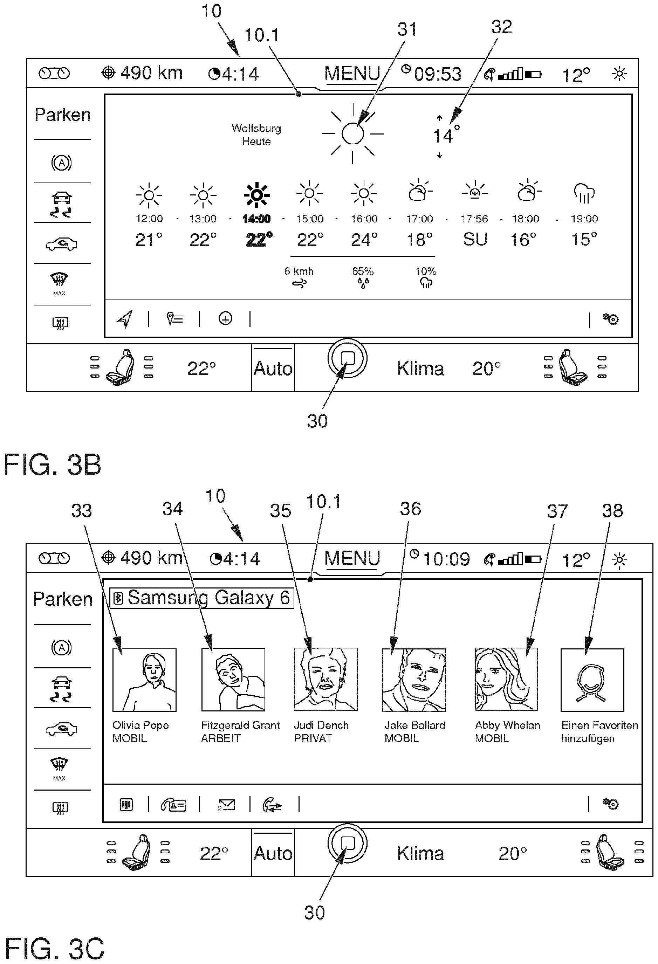

Mit Bezug zu den Figuren 3A, 3B und 3C werden Beispiele von Anzeigen erläutert, wie sie bei der Ausführung eines zweiten Ausführungsbeispiels des erfindungsgemäßen Verfahrens erzeugt werden können. Dabei wird von dem oben mit Bezug zu Figur 1 erläuterten Ausführungsbeispiel des erfindungsgemäßen Bediensystems ausgegangen. Die Erzeugung der Anzeigen erfolgt im Wesentlichen analog die bei dem oben mit Bezug zu den Figuren 2A und 2B erläuterten Ausführungsbeispiel des erfindungsgemäßen Verfahrens.

Bei dem in Figur 3A dargestellten Fall ist die Bedienoberfläche 10 auf an sich bekannte Weise als Startbildschirm ausgebildet, wie er etwa nach dem Aktivieren des Systems angezeigt wird und/oder zu dem der Nutzer durch bestimmte Bedienhandlung immer wieder zurückkehren kann. Bei dem Ausführungsbeispiel ist zur Erfassung dieser Bedienhandlung eine Schaltfläche 30 vorgesehen, die als sogenannter *"Home-Button"* ausgeprägt ist. Der Nutzer kann durch eine Betätigung dieser Schaltfläche 30 stets zu einer Ansicht des Startbildschirms zurückkehren.

Die Bedienoberfläche 10 umfasst einen Programmdatenbereich 10.1, in dem wiederum drei Teilbereiche 11.1, 11.2, 11.3 vorgesehen sind, die jeweils verschiedenen Anwendungsprogrammen zugeordnet sind. Die Teilbereiche 11.1, 11.2, 11.3 sind als Kacheln beziehungsweise *Widgets* ausgebildet und umfassen verschiedene grafische Elemente 31, 32, 33, 34 zur Ausgabe von Informationen über den Zustand und die Funktionsweise sowie zur Bedienung der den jeweiligen Kacheln 11.1, 11.2, 11.3 zugeordneten Anwendungsprogramme. Bei dem Ausführungsbeispiel ist eine erste Kachel 11.1 einem Anwendungsprogramm zur Steuerung der Medienwiedergabeeinrichtung 7 zugeordnet, eine zweite Kachel 11.2 einem Anwendungsprogramm zur Ausgabe von Wetterdaten und eine dritte Kachel 11.3 zur Verwaltung eines Telefonbuchs und zur Steuerung einer Telekommunikationseinrichtung des Fahrzeugs 1, insbesondere zum Herstellen einer telefonischen Verbindung.

Die Bedienoberfläche 10 umfasst neben dem Programmdatenbereich 10.1 ferner weitere grafische Elemente, die in diesem Fall unabhängig von der Anzeige im Programmdatenbereich 10.1 dargestellt werden. Insbesondere sind dabei Schaltflächen vorgesehen, die einen schnellen Zugriff auf besonders wichtige Funktionen des Fahrzeugs 1 erlauben, etwa zur Temperaturregelung, Fahrerassistenzsysteme sowie Informationen über den Status von Kommunikationseinrichtungen des Fahrzeugs 1.

Bei dem in Figur 3B gezeigten Fall wurde der Vollbild-Modus für das Anwendungsprogramm zur Anzeige von Wetterdaten (siehe Kachel 11.2 rechts oben in Figur 3A) aktiviert. Im Vollbild-Modus werden Ausgabedaten des Anwendungsprogramms so angezeigt, dass sie im Wesentlichen den gesamten Programmdatenbereich 10.1 ausfüllen. Die Darstellung umfasst zwei grafische Elemente 31, 32, die bereits im Kachel-Modus angezeigt wurden sowie weitere grafische Elemente, die zusätzlich dazu angezeigt werden, beispielsweise für eine Anzeige der zeitlichen Entwicklung der klimatischen Bedingungen.

Bei dem Übergang von dem Kachel-Modus (siehe Figur 3A) zu dem Vollbild-Modus (siehe Figur 3B) werden diejenigen grafischen Elemente 31, 32, die auch in der Darstellung im Vollbild-Modus angezeigt werden, verschoben. Bei dem Ausführungsbeispiel ist ferner eine Vergrößerung anhand eines Skalierungsfaktors vorgesehen, die allerdings nicht notwendigerweise vorgesehen sein muss.

Die Übergangsanimation wird ferner in Abhängigkeit davon erzeugt, von welcher Position der jeweiligen Kachel 11.1, 11.2, 11.3 die Vergrößerung zum Vollbild-Modus verfolgt. Beispielsweise wird die Verschiebung der grafischen Elemente einer 30, 32 unterschiedlich erzeugt, je nachdem, an welcher Position sich die ursprüngliche Kachel 11.1, 11.2, 11.3 bei aktiviertem Kachel-Modus befindet.

Bei dem Ausführungsbeispiel ist vorgesehen, dass bei dem Wechsel von dem Kachel-Modus zu dem Vollbild-Modus einzelne grafische Elemente nicht mehr dargestellt werden, wie etwa ersichtlich ist aus dem Vergleich der Kachel 11.2 zur Ausgabe von Wetterdaten im Kachel-Modus (Figur 3A) mit der ansprechenden Vollbilddarstellung (Figur 3B). Bei der Übergangsanimation können solche grafischen Elemente beispielsweise aus dem sichtbar dargestellten Bereich der Bedienoberfläche 10 beziehungsweise aus dem Programmdatenbereich 10.1 heraus verschoben und/oder ausgeblendet werden. Ferner können andere Arten der Darstellung vorgesehen sein.

Bei dem in Figur 3C gezeigten Fall wurde der Vollbild-Modus für das Anwendungsprogramm zur Anzeige von Daten eines Telefonbuchs (siehe Kachel 11.3 rechts unten in Figur 3A) aktiviert. Auch hier werden im Vollbild-Modus Ausgabedaten des Anwendungsprogramms so angezeigt, dass sie im Wesentlichen den gesamten Programmdatenbereich 10.1 ausfüllen. Die Darstellung umfasst zwei grafische Elemente 33, 34, die bereits im Kachel-Modus angezeigt wurden sowie weitere grafische Elemente 35, 36, 37, 38, die zusätzlich dazu angezeigt werden und die Anzahl der angezeigten Kontakte des Telefonbuchs erweitern. Die grafischen Elemente 33, 34, 35, 36, 37, 38 umfassen dabei jeweils einen Bild, dass jeweils einem Kontakt des Telefonbuchs zugeordnet ist, sowie im Vollbild-Modus eine Textinformation zu dem jeweiligen Kontakt. Ferner ist eines der grafischen Elemente 38 als Schaltfläche ausgebildet, durch die ein neuer Kontakt der Liste hinzugefügt werden kann. Ferner werden weitere Schaltflächen und Informationselemente angezeigt.

Die Übergangsanimation wird dabei so erzeugt, dass die dem Telefonbuch zugeordnete Kachel 11.3 vergrößert wird, bis sie schließlich den gesamten Programmdatenbereich 10.1 einnimmt. Gleichzeitig werden die im Kachel-Modus dargestellten grafischen Elemente 33, 34 vergrößert und entsprechend der Vergrößerung der Kachel 11.3 verschoben. Gleichzeitig wird dargestellt, dass die Reihe der weiteren grafischen Elemente 35, 36, 37, 38 an die bereits vorhandenen grafischen Elemente 33, 34 anschließend in den sichtbaren Bereich der Bedienoberfläche 10 hinein verschoben werden.

Neue grafische Elemente, beispielsweise Schaltflächen, die erst im Vollbild-Modus sichtbar werden, werden bei dem Ausführungsbeispiel aus einem Bereich außerhalb der Darstellung des Programmdatenbereich 10.1 in diesen hinein verschoben oder eingeblendet. Alternativ oder zusätzlich können weitere Arten der Darstellung vorgesehen sein.

Bei dem Ausführungsbeispiel kann ferner vorgesehen sein, dass die Abstände zwischen den grafischen Elementen 33, 34, 35, 36, 37, 38 im Vollbild-Modus gegenüber dem Kachel-Modus vergrößert sind. Insbesondere sind die Abstände stärker vergrößert als gemäß der Skalierung der grafischen Elemente 33, 34, 35, 36, 37, 38 vorgesehen, das heißt, im Kachel-Modus wird eine dichtere Anordnung gegenüber dem Vollbild-Modus erreicht.

### Bezugszeichenliste

1 Fahrzeug
2 Touchscreen
3 Erfassungseinheit; berührungsempfindliche Oberfläche
4 Ausgabeeinheit; Anzeigefläche
5 Recheneinheit
6 Steuereinheit
7 Medienwiedergabeeinrichtung
8 Annäherungserfassungseinheit
10 Bedienoberfläche (Darstellung)
10.1 Programmdatenbereich
11.1; 11.2; 11.3; 11.4; 11.5 Teilbereich; Kachel; Widget
12; 13; 14; 15; 16 grafisches Element (Kachel-Modus)
22; 23; 24; 25; 26 grafisches Element (Vollbild-Modus)
22.1; 22.2; 22.3; 22.4 neues grafisches Element (Vollbild-Modus)
30 Schaltfläche "Home-Button"
31; 32; 33; 34 grafisches Element)
35; 36; 37; 38 neues grafisches Element (Vollbild-Modus)

## Patentansprüche

1. Verfahren zum Bereitstellen einer Benutzerschnittstelle, bei dem
zumindest ein Anwendungsprogramm ausgeführt wird; und
Grafikdaten einer Bedienoberfläche (10) erzeugt und ausgegeben werden; wobei für das Anwendungsprogramm ein Kachel-Modus oder ein Vollbild-Modus aktivierbar ist; wobei
die Bedienoberfläche (10) einen Teilbereich (10.1; 11.1, 11.2, 11.3, 11.4, 11.5) aufweist, dem das Anwendungsprogramm zugeordnet ist und der dem Anwendungsprogramm zugeordnete grafische Elemente (12, 13, 14, 15, 16; 22, 23, 24, 25, 26; 22.1, 22.2, 22.3, 22.4; 31 bis 38) umfasst; wobei,
wenn der Kachel-Modus aktiviert ist, der Teilbereich (11.1, 11.2, 11.3, 11.4, 11.5) eine erste Flächenausdehnung aufweist und die grafischen Elemente (12, 13, 14, 15, 16; 31 bis 34) in einer ersten Anordnung relativ zueinander angeordnet sind; und,
wenn der Vollbild-Modus aktiviert ist, der Teilbereich (10.1) eine zweite Flächenausdehnung aufweist, die von der ersten Flächenausdehnung verschieden ist, und die grafischen Elemente (20 bis 26; 22.1, 22.2, 22.3, 22.4; 31 bis 38) in einer zweiten Anordnung relativ zueinander angeordnet sind, die von der ersten Anordnung verschieden ist; wobei
bei einem Wechsel zwischen dem Kachel-Modus und dem Vollbild-Modus eine Übergangsanimation erzeugt und angezeigt wird; wobei
die Übergangsanimation für zumindest eine Teilmenge der grafischen Elemente (12, 13, 14, 15, 16; 31 bis 34) eine Translation umfasst und die Translation als kontinuierliche Bewegung ausgegeben wird,
**dadurch gekennzeichnet, dass**
eine Fahrzeuggeschwindigkeit erfasst wird; und
die Übergangsanimation in Abhängigkeit von der Fahrzeuggeschwindigkeit gebildet wird.

2. Verfahren gemäß Anspruch 1,
**dadurch gekennzeichnet, dass**
die zweite Flächenausdehnung des Teilbereichs größer ist als die erste Flächenausdehnung.

3. Verfahren gemäß einem der vorhergehenden Ansprüche,
**dadurch gekennzeichnet, dass**
die dem Anwendungsprogramm zugeordneten grafischen Elemente (12, 13, 14, 15, 16; 22, 23, 24, 25, 26; 22.1, 22.2, 22.3, 22.4; 31 bis 38) Schaltflächen umfassen.

4. Verfahren gemäß einem der vorhergehenden Ansprüche,
**dadurch gekennzeichnet, dass**
die erste und die zweite Anordnung der grafischen Elemente (12, 13, 14, 15, 16; 22, 23, 24, 25, 26; 22.1, 22.2, 22.3, 22.4; 31 bis 38) relativ zueinander durch zumindest einen Relativwinkel charakterisiert sind; und
der Relativwinkel bei dem Wechsel zwischen dem Kachel-Modus und dem Vollbild-Modus verändert wird.

5. Verfahren gemäß einem der vorhergehenden Ansprüche,
**dadurch gekennzeichnet, dass**
bei dem Wechsel zwischen dem Kachel-Modus und dem Vollbild-Modus für zumindest eine Teilmenge der grafischen Elemente (12, 13, 14, 15, 16; 22, 23, 24, 25, 26; 22.1, 22.2, 22.3, 22.4; 31 bis 38) ferner eine Größenänderung angezeigt wird.

6. Verfahren gemäß Anspruch 5,
**dadurch gekennzeichnet, dass**
die Größenänderung der Teilmenge der grafischen Elemente (12, 13, 14, 15, 16; 22, 23, 24, 25, 26; 22.1, 22.2, 22.3, 22.4; 31 bis 38) anhand eines Skalierungsfaktors erzeugt wird, der anhand einer stetigen Funktion in Abhängigkeit von der Zeit erzeugt wird.

7. Verfahren gemäß einem der vorhergehenden Ansprüche,
**dadurch gekennzeichnet, dass**
die Bedienoberfläche (10) einen Programmdatenbereich (10.1) umfasst; wobei,
wenn der Kachel-Modus aktiviert ist, die erste Flächenausdehnung des dem Anwendungsprogramm zugeordneten Teilbereichs (11.1, 11.2, 11.3, 11.4, 11.5) höchstens zwei Drittel der gesamten Fläche des Programmdatenbereichs (10.1) umfasst; und,
wenn der Vollbild-Modus aktiviert ist, der dem Anwendungsprogramm zugeordnete Teilbereich (10.1) die gesamte Fläche des Programmdatenbereichs (10.1) umfasst.

8. Verfahren gemäß einem der vorhergehenden Ansprüche,
**dadurch gekennzeichnet, dass**,
wenn der Kachel-Modus aktiviert ist, die Bedienoberfläche (10) neben dem Teilbereich (11.1, 11.2, 11.3, 11.4, 11.5), der dem Anwendungsprogramm zugeordnet ist, weitere Teilbereiche (11.1, 11.2, 11.3, 11.4, 11.5) umfasst; und
bei einem Übergang von dem Kachel-Modus zu dem Vollbild-Modus ein Ausblenden der weiteren Teilbereiche (11.1, 11.2, 11.3, 11.4, 11.5) ausgegeben wird.

9. Verfahren gemäß einem der vorhergehenden Ansprüche,
**dadurch gekennzeichnet, dass**
sich die Übergangsanimation über eine Zeitspanne von höchstens 1 s erstreckt, bevorzugt über zumindest 0,1 s und höchstens 0,7 s.

10. Verfahren gemäß einem der vorhergehenden Ansprüche,
**dadurch gekennzeichnet, dass**
eine Nutzereingabe erfasst wird; und
der Wechsel zwischen dem Kachel-Modus und dem Vollbild-Modus anhand der Nutzereingabe erzeugt wird.

11. Bediensystem zum Bereitstellen einer Bedienschnittstelle, umfassend
eine Recheneinheit (5), durch die zumindest ein Anwendungsprogramm ausführbar ist und Grafikdaten einer Bedienoberfläche (10) erzeugbar sind; und
eine Ausgabeeinheit (4), durch welche die Bedienoberfläche (10) ausgebbar ist; wobei
für das Anwendungsprogramm ein Kachel-Modus oder ein Vollbild-Modus aktivierbar ist; wobei
die Bedienoberfläche (10) einen Teilbereich (10.1; 11.1, 11.2, 11.3, 11.4, 11.5) aufweist, dem das Anwendungsprogramm zugeordnet ist und der dem Anwendungsprogramm zugeordnete grafische Elemente (12, 13, 14, 15, 16; 22, 23, 24, 25, 26; 22.1, 22.2, 22.3, 22.4; 31 bis 38) umfasst; wobei,
wenn der Kachel-Modus aktiviert ist, der Teilbereich (11.1, 11.2, 11.3, 11.4, 11.5) eine erste Flächenausdehnung aufweist und die grafischen Elemente (12, 13, 14, 15, 16; 31 bis 34) in einer ersten Anordnung relativ zueinander angeordnet sind; und,
wenn der Vollbild-Modus aktiviert ist, der Teilbereich (10.1) eine zweite Flächenausdehnung aufweist, die von der ersten Flächenausdehnung verschieden ist, und die grafischen Elemente (22, 23, 24, 25, 26; 22.1, 22.2, 22.3, 22.4; 31 bis 38) in einer zweiten Anordnung relativ zueinander angeordnet sind, die von der ersten Anordnung verschieden ist; wobei
bei einem Wechsel zwischen dem Kachel-Modus und dem Vollbild-Modus eine Übergangsanimation erzeugbar und ausgebbar ist; wobei
die Übergangsanimation für zumindest eine Teilmenge der grafischen Elemente (12, 13, 14, 15, 16; 31 bis 34) eine Translation umfasst und die Translation als kontinuierliche Bewegung ausgebbar ist,
**dadurch gekennzeichnet, dass**
eine Fahrzeuggeschwindigkeit erfassbar ist; und
die Übergangsanimation in Abhängigkeit von der Fahrzeuggeschwindigkeit erzeugbar ist.

12. Bediensystem gemäß Anspruch 11,
**dadurch gekennzeichnet, dass**
durch eine Erfassungseinheit (3) eine Nutzereingabe erfassbar ist; und
anhand der Nutzereingabe der Wechsel zwischen dem Kachel-Modus und dem Vollbild-Modus anhand der Nutzereingabe erzeugbar ist.

13. Bediensystem gemäß Anspruch 12,
**dadurch gekennzeichnet, dass**
die Ausgabeeinheit (4) und die Erfassungseinheit (3) von einem Touchscreen (2) umfasst sind.

14. Fahrzeug (1) mit einem Bediensystem gemäß einem der Ansprüche 11 bis 13.

## Claims

1. A method for providing a user interface, in which
at least one application program is carried out and
graphic data of an operating interface (10) are generated and output; wherein
for the application program a tile-mode or full-image mode can be activated, wherein the operating interface (10) has a sub-region (10.1; 11.1, 11.2, 11.3, 11.4, 11.5) to which the application program is assigned and which comprises graphic elements (12, 13, 14, 15, 16; 22, 23, 24, 25, 26,; 22.1, 22.2, 22.3, 22.4; 31 to 38) assigned to the application program, wherein,
if the tile-mode is activated, the sub-region (11.1, 11.2, 11.3, 11.4, 11.5) has a first surface extent and the graphic elements (12, 13, 14, 15, 16; 31 to 34) are arranged relative to one another in a first arrangement; and,
if the full-image mode is activated, the sub-region (10.1) has a second surface extent, which is different from the first surface extent, and the graphic elements (20 to 26; 22.1, 22.2, 22.3, 22.4; 31 to 38) are arranged relative to one another in a second arrangement, which is different from the first arrangement; wherein
in the event of the switch between the tile-mode and the full-image mode a transition animation is generated and displayed; wherein
the transition animation for at least one subset of the graphic elements (12, 13, 14, 15, 16; 31 to 34) comprises a translation and the translation is output as continuous movement,
**characterized in that**
a vehicle speed is detected; and
the transition animation is formed in dependence on the vehicle speed.

2. The method according to Claim 1,
**characterized in that**
the second surface extent of the sub-region is larger than the first surface extent.

3. The method according to any one of the preceding claims,
**characterized in that**
the graphic elements (12, 13, 14, 15, 16; 22, 23, 24, 25, 26; 22.1, 22.2, 22.3, 22.4; 31 to 38) assigned to the application program comprise push buttons.

4. The method according to any one of the preceding claims,
**characterized in that**
the first and the second arrangement of the graphic elements (12, 13, 14, 15, 16; 22, 23, 24, 25, 26; 22.1, 22.2, 22.3, 22.4; 31 to 38) are characterized relative to one another by at least one relative angle; and
the relative angle is changed in the event of the switch between the tile-mode and the full-image mode.

5. The method according to any one of the preceding claims,
**characterized in that**
in the switch between the tile-mode and the full-image mode for at least a subset of the graphic elements (12, 13, 14, 15, 16; 22, 23, 24, 25, 26; 22.1, 22.2, 22.3, 22.4; 31 to 38) a modification of the size is also displayed.

6. The method according to Claim 5,
**characterized in that**
the modification of size of the subset of the graphic elements (12, 13, 14, 15, 16; 22, 23, 24, 25, 26; 22.1, 22.2, 22.3, 22.4; 31 to 38) is generated by means of a scale factor, which is generated by means of a continuous function in dependence on the time.

7. The method according to any one of the preceding claims,
**characterized in that**
the operating interface (10) comprises a program data area (10.1); wherein,
if the tile-mode is activated, the first surface extent of the sub-region (11.1, 11.2, 11.3, 11.4, 11.5) assigned to the application program comprises a maximum of two thirds of the total surface of the program data area (10.1); and
if the full-image mode is activated, the sub-region (10.1) assigned to the application program comprises the total surface of the program data area (10.1).

8. The method according to any one of the preceding claims,
**characterized in that**
if the tile-mode is activated, the operating surface (10) in addition to the sub-region (11.1, 11.2, 11.3, 11.4, 11.5), which is assigned to the application program, comprises further sub-regions (11.1, 11.2, 11.3, 11.4, 11.5); and
in the transition from the file-mode to the full-image mode a fading out of the further sub-regions (11.1, 11.2, 11.3, 11.4, 11.5) is output.

9. The method according to any one of the preceding claims,
**characterized in that**
the transition animation extends over a time span of at most 1 second, preferably over at least 0.1 seconds and at most 0.7 seconds.

10. The method according to any one of the preceding claims,
**characterized in that**
a user input is detected; and
the switch between the file-mode and the full-image mode is generated by means of the user input.

11. An operating system for providing an operating interface, comprising
a computer unit (5), by means of which at least one application program can be carried out and graphic data of an operating interface (10) can be generated; and
an output unit (4), by means of which the operating interface (10) can be output; wherein
for the application program a tile-mode or a full-image mode can be activated; wherein
the operating interface (10) has a sub-region (10.1; 11.1, 11.2, 11.3, 11.4, 11.5), to which the application program is assigned and which comprises graphic elements (12, 13, 14, 15, 16; 22, 23, 24, 25, 26; 22.1, 22.2, 22.3, 22.4; 31 to 38) assigned to the application program; wherein
if the tile-mode is activated, the sub-region (11.1, 11.2, 11.3, 11.4, 11.5) has a first surface extent and the graphic elements (12, 13, 14, 15, 16; 31 to 34) are arranged relative to one another in a first arrangement; and,
if the full-image mode is activated, the sub-region (10.1) has a second surface extent, which is different from the first surface extent, and the graphic elements (22, 23, 24, 25, 26; 22.1, 22.2, 22.3, 22.4; 31 to 38) are arranged relative to one another in a second arrangement, which is different from the first arrangement; wherein
in a switch between the tile-mode and the full-image mode a transition animation can be generated and output; wherein
the transition animation for at least one subset of the graphic elements (12, 13, 14, 15, 16; 31 to 34) comprises a translation and the translation can be output as a continuous movement,
**characterized in that**
the vehicle speed can be detected; and
the transition animation can be generated in dependence on the vehicle speed.

12. The operating system according to Claim 11,
**characterized in that**
a user input can be detected by means of a detection unit (3); and
by means of the user input the switch between the tile-mode and the full-image mode can be generated by means of the user input.

13. The operating system according to Claim 12,
**characterized in that**
the output unit (4) and the detection unit (3) are comprised of a touchscreen (2).

14. The vehicle (1) with an operating system according to any one of Claims 11 to 13.

## Revendications

1. Procédé de mise à disposition d'une interface de commande, dans lequel au moins un programme d'application est exécuté ; et
des données graphiques d'une interface de commande (10) sont générées et émises ;
un mode vignette ou un mode plein écran pouvant être activé pour le programme d'application ;
l'interface de commande (10) comprenant une zone partielle (10.1 ; 11.1, 11.2, 11.3, 11.4, 11.4, 11.5) à laquelle est attribuée le programme d'application, et qui comprend des éléments graphiques (12, 13, 14, 15, 16 ; 22, 23, 24, 25, 26 ; 22.1, 22.2, 22.3, 22.4 ; 31 à 38) attribués au programme d'application ; moyennant quoi lorsque le mode vignette est activé, la zone partielle (11.1, 11.2, 11.3, 11.4, 11.4, 11.5) présente une première extension de surface et les éléments graphiques (12, 13, 14, 15, 16 ; 31 à 34) sont disposés dans une première disposition entre eux ; et
lorsque le mode plein écran est activé, la zone partielle (10.1) présente une deuxième extension de surface qui est différente de la première extension de surface, et les éléments graphiques (20 à 26 ; 22.1, 22.2, 22.3, 22.4 ; 31 à 38) sont disposés entre eux dans une deuxième disposition qui est différente de la première disposition ; moyennant quoi
lors d'un changement entre le mode vignette et le mode plein écran, une animation de transition est générée et affichée ; moyennant quoi
l'animation de transition comprend, pour au moins une partie des éléments graphiques (12, 13, 14, 15, 16 ; 31 à 34), une translation et la translation est affichée comme un mouvement continu,
**caractérisé en ce que**
une vitesse de véhicule est mesurée ; et
l'animation de transition est produite en fonction de la vitesse du véhicule.

2. Procédé selon la revendication 1,
**caractérisé en ce que**
la deuxième extension de surface de la zone partielle est supérieure à la première extension de surface.

3. Procédé selon l'une des revendications précédentes,
**caractérisé en ce que**
les éléments graphiques (12, 13, 14, 15, 16 ; 22, 23, 24, 25, 26 ; 22.1, 22.2, 22.3, 22.4 ; 31 à 38) comprennent des boutons.

4. Procédé selon l'une des revendications précédentes,
**caractérisé en ce que**
les première et deuxième dispositions des éléments graphiques (12, 13, 14, 15, 16 ; 22, 23, 24, 25, 26 ; 22.1, 22.2, 22.3, 22.4 ; 31 à 38) sont caractérisées l'une par rapport à l'autre par au moins un angle relatif ; et
l'angle relatif est modifié lors du passage du mode vignette au mode plein écran.

5. Procédé selon l'une des revendications précédentes,
**caractérisé en ce que**
lors du passage du mode vignette au mode plein écran, pour au moins une partie des éléments graphiques (12, 13, 14, 15, 16 ; 22, 23, 24, 25, 26 ; 22.1, 22.2, 22.3, 22.4 ; 31 à 38), une variation de taille est en outre affichée.

6. Procédé selon la revendication 5,
**caractérisé en ce que**
la variation de taille de la partie des éléments graphiques (12, 13, 14, 15, 16 ; 22, 23, 24, 25, 26 ; 22.1, 22.2, 22.3, 22.4 ; 31 à 38) est générée à l'aide d'un facteur de mise à l'échelle qui est généré à l'aide d'une fonction continue en fonction du temps.

7. Procédé selon l'une des revendications précédentes,
**caractérisé en ce que**
l'interface de commande (10) comprend une zone de données du programme (10.1) ; moyennant quoi
lorsque le mode vignette est activé, la première extension de surface de la zone partielle (11.1, 11.2, 11.3, 11.4, 11.5) attribuée au programme d'application comprend au moins les deux tiers de la surface totale de la zone de données du programme (10.1) ; et
lorsque le mode plein écran est activé, la zone partielle (10.1) attribuée au programme d'application comprend la surface totale de la zone de données du programme (10.1).

8. Procédé selon l'une des revendications précédentes,
**caractérisé en ce que**
lorsque le mode vignette est activé, l'interface de commande (10) comprend, en plus de la zone partielle (11.1, 11.2, 11.3, 11.4, 11.5), qui est attribuée au programme d'application, d'autres zones partielles (11.1, 11.2, 11.3, 11.4, 11.5) ; et
lors d'une transition du mode vignette au mode plein écran, un masquage des autres zones partielles (11.1, 11.2, 11.3, 11.4, 11.5) est affiché.

9. Procédé selon l'une des revendications précédentes,
**caractérisé en ce que**
l'animation de transition s'étend sur un laps de temps de 1 s maximum, de préférence sur au moins 0,1 s et 0,7 s maximum.

10. Procédé selon l'une des revendications précédentes,
**caractérisé en ce que**
une entrée d'utilisateur est détectée ; et
le changement entre le mode vignette et le mode plein écran est généré à l'aide de l'entrée d'utilisateur.

11. Système de commande pour la mise à disposition d'une interface de commande, comprenant
une unité de calcul (5) à l'aide de laquelle au moins un programme d'application peut être exécuté et des données graphiques d'une interface de commande (10) peuvent être générées ; et
une unité d'affichage (4) à l'aide de laquelle l'interface de commande (10) peut être affichée ; moyennant quoi
pour le programme d'application, un mode vignette ou un mode plein écran peut être activé ; moyennant quoi
l'interface de commande (10) comprend une zone partielle (10.1 ; 11.1, 11.2, 11.3, 11.4, 11.5) à laquelle le programme d'application est attribué, et qui comprend des éléments graphiques (12, 13, 14, 15, 16 ; 22, 23, 24, 25, 26 ; 22.1, 22.2, 22.3, 22.4 ; 31 à 38) attribués au programme d'application ; moyennant quoi lorsque le mode vignette est activé, la zone partielle (11.1, 11.2, 11.3, 11.4, 11.4, 11.5) présente une première extension de surface et les éléments graphiques (12, 13, 14, 15, 16 ; 31 à 34) sont disposés dans une première disposition entre eux ; et
lorsque le mode plein écran est activé, la zone partielle (10.1) présente une deuxième extension de surface qui est différente de la première extension de surface, et les éléments graphiques (22, 23, 24, 25, 26 ; 22.1, 22.2, 22.3, 22.4 ; 31 à 38) sont disposés entre eux dans une deuxième disposition qui est différente de la première disposition ; moyennant quoi
lors d'un changement entre le mode vignette et le mode plein écran, une animation de transition est générée et affichée ; moyennant quoi
l'animation de transition comprend, pour au moins une partie des éléments graphiques (12, 13, 14, 15, 16 ; 31 à 34), une translation et la translation est affichée comme un mouvement continu,
**caractérisé en ce que**
une vitesse de véhicule peut être mesurée ; et
l'animation de transition peut être générée en fonction de la vitesse du véhicule.

12. Système de commande selon la revendication 11,
**caractérisé en ce que**
une unité de détection (3) permet de détecter une entrée d'utilisateur ; et
à l'aide de l'entrée d'utilisateur, le changement entre le mode vignette et le mode plein écran peut être généré à l'aide de l'entrée d'utilisateur.

13. Système de commande selon la revendication 12,
**caractérisé en ce que**
l'unité d'affichage (4) et l'unité de détection (3) sont comprises dans un écran tactile (2).

14. Véhicule (1) avec un système de commande selon l'une des revendications 11 à 13.
